Europäisches Patentamt

European Patent Office

Office européen des brevets

(19)

(11) Veröffentlichungsnummer: **0 231 924 B1**

(12) # EUROPÄISCHE PATENTSCHRIFT

(45) Veröffentlichungstag der Patentschrift: 02.10.91

(51) Int. Cl.⁵: **B60Q 1/42**

(21) Anmeldenummer: **87101390.0**

(22) Anmeldetag: **02.02.87**

(54) **Elektrischer Schalter, insbesondere Lenkstockschalter für Kraftfahrzeuge.**

(30) Priorität: **07.02.86 DE 3603820**

(43) Veröffentlichungstag der Anmeldung:
**12.08.87 Patentblatt 87/33**

(45) Bekanntmachung des Hinweises auf die
Patenterteilung:
**02.10.91 Patentblatt 91/40**

(84) Benannte Vertragsstaaten:
**ES FR GB IT**

(56) Entgegenhaltungen:
CH-A- 382 575          DE-A- 3 211 672
FR-A- 1 391 586        FR-A- 1 416 043
FR-A- 2 223 211        FR-A- 2 344 111

(73) Patentinhaber: **SWF Auto-Electric GmbH
Stuttgarter Strasse 119 Postfach 135
W-7120 Bietigheim-Bissingen(DE)**

(72) Erfinder: **Erdelitsch, Herbert
Berliner Strasse 8
W-7120 Bietigheim-Bissingen(DE)**
Erfinder: **Hecht, Walter
Sudetenstrasse 86
W-7120 Bietigheim-Bissingen(DE)**
Erfinder: **Rachner, Horst
Weingartweg 8
W-7120 Bietigheim-Bissingen(DE)**

## Beschreibung

Die Erfindung betrifft einen Schalter gemäß dem Oberbegriff des Anspruchs 1.

Beispielsweise aus der DE-A 32 11 672 ist ein Lenkstockschalter für Kraftfahrzeuge bekannt, der einen Wischer-Wascher-Schalter und einen Fahrtrichtungs- und Fahrlichtumschalter beinhaltet. Beide Einzelschalter besitzen jeweils einen Schalthebel, an dem ein kreisringförmiges Schaltglied einstückig angeformt ist, das sich um die Lenkspindel herum erstreckt. Jedes Schaltglied ist um eine parallel zur Lenkspindelachse verlaufende, das Schaltglied zapfenartig durchdringende Schwenkachse schwenkbar gelagert. Durch Schwenken des Schalthebels können beim Wischer-Wascher-Schalter die Wischvorgänge eingeschaltet und beendet werden und beim Fahrtrichtungs- und Fahrlichtumschalter die Fahrtrichtungsänderungen angezeigt werden. Weiterhin können die Schaltglieder gegenüber den Schwenkebenen mittels der Schalthebel gekippt werden. Durch eine Kippbewegung kann beim Wischer-Wascher-Schalter ein Waschvorgang eingeleitet und beim Fahrtrichtungs- und Fahrlichtumschalter die Lichthupe betätigt und die Fahrlichtumschaltung ausgelöst werden. Außer in den Schaltstellungen Waschen und Lichthupe sind die Schaltglieder in den verschiedenen Schaltstellungen mittels mehrerer Rasteinrichtungen festlegbar. In das Wischer-Wascher-Schaltglied ist dazu an einem der Schwenkachse etwa diametral gegenüberliegenden Abschnitt eine sägezahnähnliche Rastkurve eingelassen, in welcher ein um eine zur Lenkspindelachse parallele Achse schwenkbar gelagerter, federbelasteter Rasthebel mit einer Rastnase eingreift.

Bei einem aus der DE-C 33 04 942 bekannten Lenkstockschalter, dessen grundsätzlicher Aufbau dem Lenkstockschalter nach der DE-A 32 11 672 entspricht, befindet sich die Rastkurve am Rasthebel und die Rastnase am Schaltglied.

Unabhängig von diesem Unterschied genügt bei den bekannten elektrischen Schaltern die Führung von Schalthebel und Schaltglied in ihrer Schwenkebene nicht den gestellten Anforderungen.

Der Erfindung liegt daher die Aufgabe zugrunde, einen elektrischen Schalter der eingangs genannten Art so weiterzuentwickeln, daß die Führung des Schalthebels und des Schaltglieds in der Schwenkebene ohne viel Aufwand und ohne nennenswerte Zunahme der Baugröße verbessert ist.

Diese Aufgabe wird erfindungsgemäß dadurch gelöst, daß bei einem elektrischen Schalter mit den Merkmalen aus dem Oberbegriff des Anspruchs 1 das Schaltglied in der Schwenkebene an dem Rasthebel geführt ist.

Bei einem erfindungsgemäßen elektrischen Schalter wird also der Rasthebel, der eines der Rastelemente aufweist, dazu benutzt, die Führung des Schaltglieds in der Schwenkebene zu verbessern. Zusätzliche Teile sind nicht notwendig, so daß der Aufwand für diese Verbesserung gering ist. Das Schaltglied muß nun bis zum Rasthebel vorgreifen, erfährt dadurch jedoch nur eine unwesentliche Vergrößerung, so daß der Raumbedarf praktisch nicht zunimmt.

An sich ist es aus dem DE-U 81 18 036 bekannt, bei einem elektrischen Schalter mit einem in einer Schwenkebene verschwenkbar und aus dieser Ebene verkippbar gelagerten Schaltglied dieses in der Schwenkebene außer durch die Lagerachse durch zusätzliche Mittel zu führen. Allerdings dient zur Führung eine unterhalb des Schaltglieds an den Sockel angeformte Leiste und nicht ein mit einem Rastelement versehener Rasthebel.

Vorteilhafte Ausgestaltungen eines erfindungsgemäßen elektrischen Schalters kann man den Unteransprüchn entnehmen.

Besondere Vorteile werden erreicht, wenn die Führung gemäß Anspruch 2 als Nut-Leistenverbindung ausgebildet ist. Dadurch werden Montageprobleme vermieden, die bei einer ebenso möglichen Ausführungsform mit einem durch eine Bohrung im Schaltglied zu führenden Rasthebel auftreten können. Bevorzugt wird gemäß Anspruch 3 der ganze Rasthebel als Leiste verwendet, die in eine Nut am Schaltglied eingreift.

Durch eine ballige Ausbildung der Leiste gemäß Anspruch 4 wird gewährleistet, daß wenigstens eine günstig ausgebildete Kippfläche für das Schaltglied vorhanden ist.

Gemäß Anspruch 5 ist der Rasthebel nicht nur an einem Ende am Sockel schwenkbar gelagert, sondern auch an seinem freien Ende am Sockel in der Schwenkebene geführt, so daß er seine Lage in der Schwenkebene sicher beibehält.

Als Schwenklager für den Rasthebel wird gemäß Anspruch 8 vorteilhafterweise ein Filmscharnier benutzt, so daß der Aufwand für die Lagerung des Rasthebels gering ist, die Lagerung weitgehend spielfrei gestaltet werden kann und eine Geräuschentkoppelung zum Sockel erreicht wird. Eine einfache und sichere Befestigung des Rasthebels ergibt sich dabei durch die Maßnahme nach Anspruch 9.

Weitere vorteilhafte Ausgestaltungen sind in den übrigen Unteransprüchen enthalten.

Anhand des in den Zeichnungen als Ausführungsbeispiel dargestellten Lenkstockschalters wird die Erfindung nun näher erläutert.

Es zeigen:

Fig. 1     einen Längsschnitt durch den Lenkstockschalter,

Fig. 2     einen Schnitt entlang der Linie II-II aus Fig. 1 durch einen zum Lenkstockschalter gehörenden Fahrtrichtungs- und Fahrtlichtumschalter,

Fig. 3 einen Schnitt entlang der Linie III-III aus Fig. 1 durch einen zum Lenkstockschalter gehörenden Wischer-Wascher-Schalter,

Fig. 4 einen Schnitt durch die Befestigungsstelle eines Rasthebels und

Fig. 5 eine Ansicht des einen Endes einer den Rasthebel beaufschlagenden Blattfeder.

Der Lenkstockschalter besitzt in zwei untereinander liegenden Ebenen einen Fahrtrichtungs- und Fahrlichtumschalter 10 und einen Wischer-Wascher-Schalter 11. Beide Einzelschalter 10 und 11 besitzen jeweils einen im wesentlichen kreisringförmigen Sockel 12 bzw. 13, in den Leiterbahnen 14 bzw. 15 eingebettet sind, die an Bereichen 16 bzw. 17 freiliegen, die Festkontakte des Fahrtrichtungs- und Fahrlichtumschalters 10 bzw. des Wischer-Wascher-Schalters 11 darstellen. Die beiden Sockel 12 und 13 haben eine gemeinsame Mittelachse 9. Der Sockel 12 des Fahrtrichtungs- und Fahrlichtumschalters 10 ist dabei an einem Randbereich senkrecht nach unten abgewinkelt, in dem er ebenfalls mit Leiterbahnen 18 versehen ist, die an Bereichen 19 freiliegen, welche ebenfalls Festkontakte darstellen. Die unteren Enden der Leiterbahnen 18 sind als Steckeranschlußstifte 20 ausgebildet und ragen in einen Rahmen 21, der an den Sockel 13 angeformt ist. Der Sockel 13 des Wischer-Wascher-Schalters 11 ist im gleichen Bereich wie der Sockel 12 des Fahrtrichtungs- und Fahrlichtumschalters 10 senkrecht nach unten abgewinkelt und besitzt Steckeranschlußstifte 22, die in den Rahmen 21 ragen. Den Steckeranschlußstiften 22 bezüglich der Mittelachse 9 etwa gegenüberliegend ist an den Sockel 13 des Wischer-Wascher-Schalters 11 eine sich senkrecht nach unten erstreckende, unten geschlossene, buchsenartige Aufnahme 23 angeformt. In dieser Aufnahme 23 ist der nicht näher dargestellte, mit dem Bezugzeichen 24 bezeichnete Schaltmechanismus des Wascher-Schalters angeordnet. Beide Schalter 10 und 11 besitzen noch an den Rändern der Sockel 12 bzw. 13 angeformte, sich senkrecht nach oben erstreckende Seitenwände 25 und 26. Der obere Abschluß des Lenkstockschalters wird durch einen Deckel 27 gebildet, der auf von dem Sockel 12 des Fahrtrichtungs- und Fahrlichtumschalters 10 hochstehenden Stützen aufliegt.

Der Fahrtrichtungs- und Fahrlichtumschalter 10 und der Wischer-Wascher-Schalter 11 besitzen jeweils einen Lagerzapfen 28 bzw. 29, der senkrecht nach oben steht. Der Lagerzapfen 28 ist einstückig an den Deckel 27 und der Lagerzapfen 29 einstückig an den Sockel 13 angeformt. Diese Lagerzapfen 28 und 29 bilden Schwenkachsen für zwei kreisringförmige Schaltglieder 30 und 31, die mittels Schalthebeln 32 und 33, mit denen sie einstückig gefertigt sind, bewegt werden können. Der Lagerzapfen 28 befindet sich in einer leicht länglichen Ausnehmung 34 des Schaltgliedes 30 und ist von einer Spiralfeder 35 umgeben, die sich mit ihrem unteren Ende an den unteren Begrenzungsrändern der Ausnehmung 34 und mit ihrem oberen Ende an dem Deckel 27 abstützt. Die Spiralfeder 35 hält das Schaltglied 30 und den Schalthebel 32 normalerweise am Sockel 12 des Fahrtrichtungs- und Fahrlichtumschalters 10. Die Größe der Ausnehmung 34 erlaubt es jedoch, das Schaltglied 30 und den Schalthebel 32 entgegen der Kraft der Spiralfeder 35 zu dem Deckel 27 hin zu ziehen. Das Schaltglied 30 kann also aus seiner parallel zum Sockel 12 liegenden Schwenkebene verkippt werden. Die Achse dieser Verkippung liegt dem Lagerzapfen 28 und damit der Schwenkachse des Schaltglieds 32 bezüglich der Mittelachse 9 gegenüber. Beim Verkippen kann der Schalthebel 32 über einen Mitnehmer 36 eine an diesem eingehängte Kontaktbrücke 37 bewegen. Damit kann die sogenannte Lichthupe realisiert und die Fahrlichtumschaltung bewirkt werden. Der Lagerzapfen 29 ragt durch eine runde Ausnehmung 38 im Schaltglied 31 und ist von einer Hülse 39 umgeben, welche wiederum von einer Spiralfeder 40 umgeben ist. Die Spiralfeder 40 stützt sich mit ihrem unteren Ende an dem unteren Ende der Ausnehmung 38 und mit ihrem oberen Ende an einem Kragen der Hülse 39 ab. In das obere Ende des Lagerzapfens 29 ist ein Sackloch 41 eingelassen, in das ein stöpselartiges Teil 42 eingesetzt ist. Das stöpselartige Teil 42 liegt an dem oberen Ende des Kragens der Hülse 39 und an der unteren Fläche des Sockels 12 des Fahrtrichtungs- und Fahrlichtumschalters an. Die Spiralfeder 40 hält das Schaltglied 31 normalerweise an der Sockel 13. Die Größe der Ausnehmung 38 erlaubt es jedoch, das Schaltglied 31 entgegen der Kraft der Spiralfeder 40 zum Sockel 12 des Fahrtrichtungs- und Fahrlichtumschalters 10 hin zu ziehen. Das Schaltglied 31 kann also aus seiner parallel zu den Sockeln 12 und 13 verlaufenden Schwenkebene verkippt werden. Dadurch kann das Heckwischen und -waschen eingeleitet werden.

Die Sockel 12 und 13 sind dabei derart angeordnet, daß sich die Lagerzapfen 28 und 29 bezüglich der Mittelachse 9 einander etwa diametral gegenüberliegen. In die Schaltglieder 30 und 31 sind federbelastete Kontaktbrücken 43 bzw. 44 eingesetzt, die durch Schwenken der Schalthebel 32 bzw. 33 mit den Festkontakten 16 bzw. 17 in Wirkverbindung gebracht werden können. Dadurch können beim Fahrtrichtungs- und Fahrlichtumschalter 10 die Fahrtrichtungsänderungen angezeigt werden. Beim Wischer-Wascher-Schalter 11 können dadurch Scheibenwischer in unterschiedlichen Geschwindigkeiten betätigt werden. Die verschiedenen Schaltstellungen der beiden Schaltglieder 30 und 31 werden durch zwei Rasthebel 45 bzw. 46 festgelegt.

Dabei ist sowohl beim Fahrtrichtungs- und Fahrlichtumschalter 10 als auch beim Wischer-Wascher-Schalter 11 stets eine hohe Schaltsicherheit und Schaltgenauigkeit sowie eine einwandfreie Führung des Schaltgliedes 30 bzw. 31 und damit des Schalthebels 32 bzw. 33 gewährleistet. Das soll nachfolgend zuerst anhand des Fahrtrichtungs- und Fahrlichtumschalters 10 beschrieben werden.

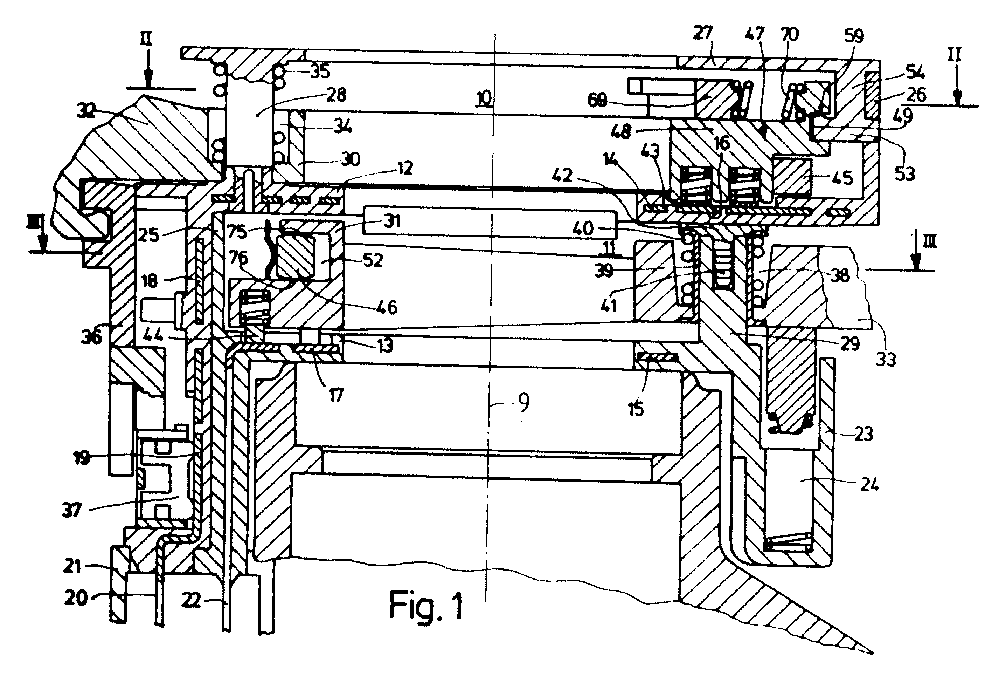

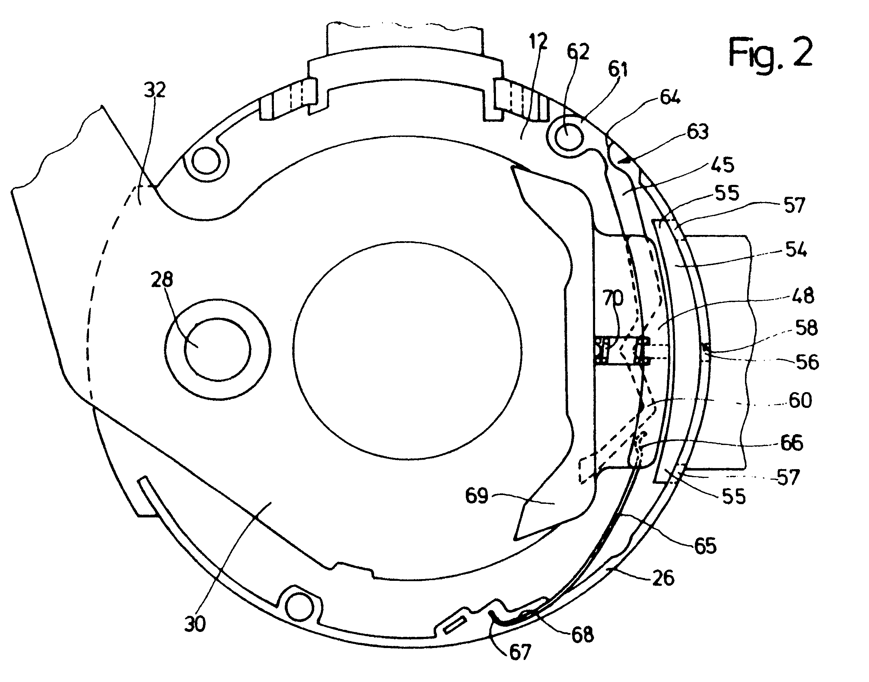

Wie die Fig. 1 und 2 zeigen, ist das Schaltglied 30 des Fahrtrichtungs- und Fahrlichtumschalters 10 an einem Abschnitt 47, der der vom Lagerzapfen 28 gebildeten Schwenkachse bezüglich der Mittelachse 9 diametral gegenüberliegt, parallel zu seiner Schwenkebene spielfrei gelagert und geführt.

Die spielfreie Lagerung und Führung ist dabei als Nut-Leistenverbindung ausgebildet. Die Nut 49 ist dabei in den Abschnitt 47 des Schaltglieds 30 eingearbeitet. Die dazu gehörige Leiste 53 ist einstückig an einem sich senkrecht nach unten erstreckenden Fortsatz des Gehäusedeckels 27 angeformt und an der Gehäuseseitenwand 26 fixiert. Dazu ist an den beiden Endbereichen 55 sowie in der Mitte 56 der Leiste 53 jeweils ein Fortsatz 57 angeformt, der spielfrei in eine Ausnehmung 58 in der Gehäuseseitenwand 26 eingreift. Wie die Fig. 2 zeigt, erstreckt sich der Fortsatz 54 und damit die Leiste 53 über einen Winkelbereich von etwa 30˚. Wie die Fig. 1 zeigt, ist die obere Fläche 59 der Leiste 53 ballig ausgebildet. Im Bereich dieser ballig ausgebildeten Fläche 59 entspricht die Ausdehnung der Leiste 53 senkrecht zur Schwenkebene exakt der entsprechenden Ausdehnung der Nut 49. Das Schaltglied 30 ist hier an seinem der Schwenkachse 28 gegenüberliegenden Abschnitt 47 stets über einen großen Bereich geführt und um eine lange, von der Leiste 53 gebildete Achse kippbar. Dadurch ist auch der Schalthebel 32 an seinem der Handhabe fernen Ende parallel zur Schwenkebene und damit quer zu seiner Längsrichtung über einen großen Bereich von einem einzigen Teil, nämlich der Leiste 53 geführt. Somit ist es nicht möglich, daß der Schalthebel 32 ungewollt um seine Längsachse verkippen kann, was die Schaltsicherheit des Schaltgliedes 30 beeinträchtigen, zumindestens aber eine Irritation der Bedienungsperson hervorrufen kann. Außerdem wird dadurch auch vermieden, daß das Schaltglied entweder am Deckel 27 oder am Sockel 12 anschlagen und dadurch Geräusche verursachen kann.

Aber auch die nachfolgend beschriebene Rastung des Schalters 10 verläuft geräuscharm. Wie zuvor bereits angedeutet, sind die verschiedenen Schaltstellungen des Schaltgliedes 30 mittels eines Rasthebels 45 festlegbar. Der Rasthebel 45 besteht dabei aus einem Kunststoff mit federelastischen Eigenschaften. Er ist, wie die Fig. 2 zeigt, mit einer zickzackförmigen Rastkurve 60 ausgestattet und als separates Teil schwenkbar an einer Wand des Sockels 12 angelenkt. Zur Befestigung dient ein Ohr 61, das auf einen an der Sockel 12 angeformten Zapfen 62 aufgedrückt ist. Zwischen dem als Ohr 61 und dem als Rastkurve 60 ausgebildeten Abschnitt ist der Rasthebel 45 durch ein Filmscharnier 63 unterteilt. Dadurch wird der Sockel 12, der ja auch einen Gehäusebereich des Lenkstockschalters darstellt, geräuschmäßig von der Rasteinrichtung entkoppelt.

Weiterhin wird der Zusammenprall zwischen der Rastkurve 60 und dem nicht dargestellten, an dem Schaltglied 30 angeformten Raster gedämpft und die vorhandene kinetische Energie langsam abgebaut. Das hat zur Folge, daß schon die Entstehung von Schallwellen weitgehend vermieden wird, so daß der Schalter 10 fast ohne Schaltgeräusche betätigt werden kann. Durch das Filmscharnier 63 wird an dem Rasthebel 45 auch eine senkrecht zur Schwenkebene verlaufende Achse 64 geschaffen, um welche die Rastkurve 60 verschwenken kann. Die Schwenkbewegungen der Rastkurve 60 werden dabei mittels einer Blattfeder 65 kontrolliert, die mit ihrem freien Ende 66 an der Rastkurve anliegt und mit ihrem anderen Ende 67 spielfrei in einer Öffnung 68 in der Gehäuseseitenwand 26 festgelegt ist. Somit ist trotz der federnden Ausbildung der Rastkurve 60 gewährleistet, daß das Schaltglied 30 genaue Schaltstellungen einnimmt. In den Fig. 1 und 2 ist noch der Auslösemechanismus des Fahrtrichtungs- und Fahrlichtumschalters 10 angedeutet. Dabei ist mit 69 das Auslöseblech angedeutet, welches auf der Oberseite des Schaltgliedes 30 befestigt ist. Mit 70 ist eine Schraubenfeder bezeichnet, die sich einerseits am Auslöseblech 69 und andererseits an dem höheren Abschnitt 47 des Schaltgliedes 30 abstützt.

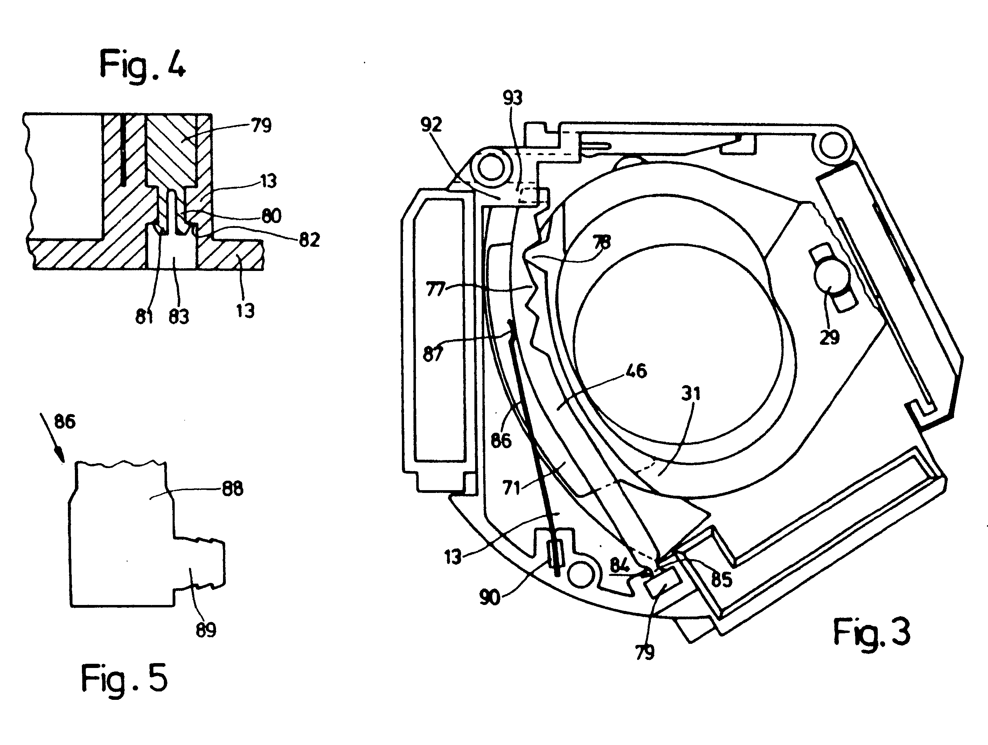

Bei dem Wischer-Wascher-Schalter 11 ist das Schaltlied 31 ebenfalls parallel zu seiner Schwenkebene an einem der Schwenkachse 29 bezüglich der Mittelachse 9 diametral gegenüberliegenden Abschnitt 71 spielfrei gelagert und geführt. Die spielfreie Lagerung und Führung ist auch hier als Nut-Leistenverbindung ausgebildet. Die Nut 52 ist in den Abschnitt 71 des Schaltglieds 31 eingearbeitet. Im Gegensatz zum Fahrtrichtungs- und Fahrlichtumschalter 10 dient aber beim Wischer-Wascher-Schalter 11 der Rasthebel 46 zur Führung und Lagerung. Der Rasthebel 46 ist dabei entlang seiner beiden oberen und unteren Längsflächen 75 und 76 ballig ausgebildet. Wie die Fig. 3 zeigt, erstrecken sich der Abschnitt 71 des Schaltgliedes 31 und der Rasthebel 46 etwa über einen Winkelbereich von 50˚. Somit wird auch hier das Schaltglied 31 stets über einen großen Bereich geführt und ist um eine lange, von dem Rasthebel 46 realisierte Kippachse kippbar. Dadurch ist auch der Schalthebel 33 an seinem der Handhabe fernen Ende parallel zur Schwenkebene und damit quer zu seiner Längsrichtung über einen großen Bereich geführt. Insgesamt ist somit auch hier eine sehr gute Schaltglied- und Schalthebellagerung und Führung gegeben.

Der Rasthebel 46 besteht aus einem Kunststoff mit federeleastischen Eigenschaften. An seinem freien Ende ist er mit einer Rastkurve 77 ausgestattet. Die Rastkurve 77 wirkt mit einer an das Schaltglied 31 angeformten Rastnase 78 zusammen. Wie die Fig. 3 und 4 zeigen, ist der Rasthebel 46 als separates Teil schwenkbar an eine Wand des Sockels 13 angelenkt. Er ist dazu, wie die Fig. 4 zeigt, an einem ersten Ende 79 mit sich senkrecht erstreckenden Klipshaken 80 ausgestattet, die mit Fortsätzen 81 an den Begrenzungsrändern 82 einer in den Sockel 13 eingelassenen Öffnung 83 anliegen. Wie die Fig. 3 weiter zeigt, ist der Rasthebel 46 zwischen seinem die Rastkurve 77 bildenden Abschnitt und dem an dem Sockel 13 festgelegten Abschnitt durch ein Filmscharnier 84 unterteilt. Dadurch besitzt der Rasthebel 46 eine sich senkrecht zur Schwenkebene des Schaltglieds 31 erstreckende Achse, um die die Rastkurve 77 schwenken kann. Die Schwenkbewegungen der Rastkurve 77 werden von einer Blattfeder 86 begrenzt, die mit ihrem freien Ende 87 an der Außenseite des Rasthebels 46 anliegt und mit ihrem anderen Ende 88 spielfrei in einer Gehäuseseitenwand 90 festgelegt ist. An seinem dem ersten Ende 79 fernen Ende 91 ist der Rasthebel 46 dabei in einem parallel zur Schwenkebene verlaufenden Führungskanal 92 gleitend beweglich geführt. Der Führungskanal 92 wird dabei zum einen von dem Sockel 13 und zum anderen von einer Begrenzungswand 93 begrenzt, die an einen an die äußere Begrenzungswand des Sockels 13 angeformten, sich senkrecht nach oben erstreckenden Fortsatz angeformt ist. Beim Schalten in Richtung Waschen und Heckwischen, was durch Ziehen des Schalthebels 33 senkrecht zum Sockel 13 bewerkstelligt wird, kippt das Schaltglied 31 über den Rasthebel 46 ab. Da sich dieser Rasthebel 46, wie zuvor erwähnt, über einen großen Winkelbereich erstreckt, liegt eine lange Kippachse vor, so daß eine hervorragende Führung des Schaltgliedes 31 und damit des Schalthebels 33 bewirkt wird. Durch den Rasthebel 46, der ein Filmscharnier 84 besitzt, wird der Sockel 13 und damit das Gehäuse von der Rasteinrichtung geräuschmäßig entkoppelt. Somit werden auch beim Wischer-Wascher-Schalter 11 Geräuschprobleme vermieden.

**Patentansprüche**

1. Elektrischer Schalter, insbesondere Lenkstockschalter für Kraftfahrzeuge, mit einem Sockel (13) und mit einem Schalthebel (33) und einem Schaltglied (31), die gemeinsam am Sockel (13) in einer Schwenkebene verschwenkbar und aus dieser Ebene verkippbar gelagert sind, und in der Schwenkebene mehrere Schaltstellungen einnehmen können, die mittels einer Rasteinrichtung festgelegt sind, die in Form einer Rastkurve (77) und einer Rastnase (78) zwei Rastelemente aufweist, von denen sich eines an einem am Sockel (13) schwenkbar gelagerten und federnd vorgespannten Rasthebel (46) befindet, dadurch gekennzeichnet, daß das Schaltglied (31) in der Schwenkebene an dem Rasthebel (46) geführt ist.

2. Elektrischer Schalter nach Anspruch 1, dadurch gekennzeichnet, daß die Führung als Nut-Leisten-Verbindung ausgebildet ist.

3. Elektrischer Schalter nach Anspruch 2, dadurch gekennzeichnet, daß der Rasthebel (46) als Leiste in die im Schaltglied (31) ausgebildete Nut (52) eingreift.

4. Elektrischer Schalter nach einem der Ansprüche 1 bis 3, dadurch gekennzeichnet, daß der Rasthebel (46) wenigstens an einer parallel zur Schwenkebene des Schaltglieds (31) verlaufenden Fläche (75, 76) ballig ausgebildet ist.

5. Elektrischer Schalter nach einem der Ansprüche 1 bis 4, dadurch gekennzeichnet, daß der Rasthebel (46) an seinem freien Ende (91) am Sockel (13) in seiner Schwenkebene geführt ist.

6. Elektrischer Schalter nach Anspruch 5, dadurch gekennzeichnet, daß das freie Ende (91) des Rasthebels (46) in eine Aussparung (92) des Sockels (13) eintaucht.

7. Elektrischer Schalter nach einem der Ansprüche 1 bis 6, dadurch gekennzeichnet, daß der Rasthebel (46) um eine Achse, die senkrecht auf der Schwenkebene des Schaltglieds (31) steht, schwenkbar ist.

8. Elektrischer Schalter nach einem der vorhergehenden Ansprüche, dadurch gekennzeichnet, daß der Rasthebel (46) als Schwenklager ein Filmscharnier (84) aufweist.

9. Elektrischer Schalter nach einem der vorhergehenden Ansprüche, dadurch gekennzeichnet, daß der Rasthebel (46) an seinem festen Ende (79) mit dem Sockel (13) in Achsrichtung verklipst ist.

10. Elektrischer Schalter nach einem der vorhergehenden Ansprüche, dadurch gekennzeichnet, daß die Führung und Lagerung des Rasthebels (46) der Schwenkachse (29) des Schaltglieds (31) gegenüberliegend vorgesehen ist.

11. Elektrischer Schalter nach einem der vorhergehenden Ansprüche, dadurch gekennzeichnet, daß die Ausdehnung der Führung zwischen Schaltglied (31) und Rasthebel (46) auf die Ausdehnung des Schaltglieds (31) in Richtung der Schwenkebene und auf den Schwenkwinkel des Schalthebels (33) abgestimmt ist.

12. Elektrischer Schalter nach Anspruch 11, dadurch gekennzeichnet, daß sich die Führung bei einem Wischer-Wascher-Schalter (11) und/oder bei einem Fahrtrichtungs- und Fahrlichtumschalter (10) über einen Winkelbereich von wenigstens 30 Grad erstreckt.

**Claims**

1. An electric switch, especially steering column switch for motor vehicles, comprising a socket (13), a switch lever (33) and a switching member (31), which are jointly swivellable on the socket (13) in a swivelling plane and are capable of being tilted from the said swivelling plane and in which they can occupy several switching positions which are secured by a locking device comprising two locking elements in the shape of a locking cam (77) and a locking lug (78), of which locking elements one is positioned on a locking lever (46) swivellably mounted on the socket (13) and resiliently prestressed, characterised in that the switching member (31) is guided on the locking lever (46) in the swivelling plane.

2. An electric switch according to claim 1, characterised in that the guidance is developed as a groove-fitting strip connection.

3. An electric switch according to claim 2, characterised in that the locking lever (46) as a fitting strip engages in the groove (52) of the switching member (31).

4. An electric switch according to one of claims 1 to 3, characterised in that the locking lever (46) is formed in a crowned manner at least on a surface (75, 76) extending in parallel to the swivelling plane of the switching member (31).

5. An electric switch according to one of claims 1 to 4, characterised in that in its swivelling plane the locking lever (46) is guided on the socket (13) by its free end (91).

6. An electric switch according to claim 5, characterised in that the free end (91) of the locking lever (46) dips into a recess (92) of the socket (13).

7. An electric switch according to one of claims 1 to 6, characterised in that the locking member (46) is swivellable about an axis perpendicularly standing on the swivelling plane of the switching member (31).

8. An electric switch according to one of the preceding claims, characterised in the the locking lever (46) comprises a film hinge as a drag bearing.

9. An electric switch according to one of the preceding claims, characterised in that at its stationary end (79) the locking lever (46) is clipped with the socket (13) in axial direction.

10. An electric switch according to one of the preceding claims, characterised in that the guidance and bearing application of the locking lever (46) is provided opposite of the swivelling axis (29) of the switching member (31).

11. An electric switch according to one of the preceding claims, characterised in that the extension of the guidance between switching member (31) and locking lever (46) is adapted to the extension of the switch lever (31) in the direction of the swivelling plane and of the swivelling angle of the switch lever (33).

12. An electric switch according to claim 11, characterised in that the guidance of a wiper-washer-switch (11) and/or of a turn-signal and headlamp beam control switch (10) extends over an angular range of at least 30°.

**Revendications**

1. Commutateur électrique, notamment commutateur de colonne de direction pour véhicules automobiles, comportant un socle (13), un levier de commutation (33) et un organe de commutation (31), qui sont montés en commun sur le socle (13) de manière à pouvoir pivoter dans un plan de pivotement et basculer à partir de ce plan et prendre, dans le plan de pivotement, plusieurs positions de commutation, qui sont déterminées au moyen d'un dispositif d'encliquetage qui comporte deux éléments d'encliquetage se présentant sous la forme d'une came d'encliquetage (77) et d'un bec d'encliquetage (78), dont l'un est situé sur un levier d'encliquetage (46) agencé de manière à pouvoir pivoter sur le socle (13) et précontraint élastiquement, caractérisé en ce que l'organe de commutation (31) est guidé dans le plan de pivotement sur le levier d'encliquetage (46).

2. Commutateur électrique selon la revendication 1, caractérisé en ce que le système de guidage est réalisé sous la forme d'un système de liaison à rainure et languette.

3. Commutateur électrique selon la revendication 2, caractérisé en ce que le levier d'encliquetage (46) pénètre sous la forme d'une barrette dans la rainure (52) ménagée dans l'organe de commutation (31).

4. Commutateur électrique selon l'une des revendications 1 à 3, caractérisé en ce que le levier d'encliquetage (46) possède une forme bombée au moins au niveau d'une surface (75,76) qui est parallèle au plan de pivotement de l'organe de commutation (31).

5. Commutateur électrique selon l'une des revendications 1 à 4, caractérisé en ce que le levier d'encliquetage (46) est guidé, au niveau de son extrémité libre (91), sur le socle (13) dans son plan de pivotement.

6. Commutateur électrique selon la revendication 5, caractérisé en ce que l'extrémité libre (91) du levier d'encliquetage (46) pénètre dans un évidement (92) du socle (13).

7. Commutateur électrique selon l'une des revendications 1 à 6, caractérisé en ce que le levier d'encliquetage (46) peut pivoter autour d'un axe qui est perpendiculaire au plan de pivotement de l'organe de commutation (31).

8. Commutateur électrique selon l'une des revendications précédentes, caractérisé en ce que le levier d'encliquetage (46) comporte, en tant que palier pivotant, une charnière en forme de pellicule (84).

9. Commutateur électrique selon l'une des revendications précédentes, caractérisé en ce que l'extrémité fixe (79) du levier d'encliquetage (46) est fixée par encliquetage au socle (13) dans la direction axiale.

10. Commutateur électrique selon l'une des revendications précédentes, caractérisé en ce que le guidage et le tourillonnage du levier d'encliquetage (46) est disposé à l'opposé de l'axe de pivotement (29) de l'organe de commutation (31).

11. Commutateur électrique selon l'une des revendications précédentes, caractérisé en ce que l'étendue du guidage entre l'organe de commutation (31) et le levier d'encliquetage (46) est réglée sur l'étendue de l'organe de commutation (31) en direction du plan de pivotement et sur l'angle de pivotement du levier de commutation (33).

12. Commutateur électrique selon la revendication 11, caractérisé en ce que dans le cas d'un commutateur d'essuie-glace/lave-glace (11) et/ou dans le cas d'un commutateur de la direction de déplacement et des témoins de changement de direction (10), le guide s'étend sur une plage angulaire d'au moins 30 degrés.

Fig. 1

EP 0 231 924 B1

Fig. 2

Fig. 3

Fig. 4

Fig. 5